# EUROPÄISCHE PATENTSCHRIFT

(11) **EP 1 314 530 B1**
(45) Veröffentlichungstag und Bekanntmachung des Hinweises auf die Patenterteilung: **05.10.2005**
(21) Anmeldenummer: 02024923.1
(22) Anmeldetag: 06.11.2002
(51) Int. Cl.: B29C 45/13, B29C 45/18, B29C 45/17

(54) **Kunststoffspritzgiesssystem und Verfahren zur Herstellung von Kunststoff-Formteilen**
Injection moulding system and process for the manufacture of injection moulded resin parts
Système de moulage par injection et procédé de fabrication de pièces moulées en matière plastique

(30) Priorität: 19.11.2001 DE 10156718
(43) Veröffentlichungstag der Anmeldung: 28.05.2003
(73) Patentinhaber: Bayer MaterialScience AG, 51368 Leverkusen (DE)
(72) Erfinder: Sarabi, Bahman, Dr., 47803 Krefeld (DE); Salewski, Klaus, 47802 Krefeld (DE)

(56) Entgegenhaltungen:
- US-A- 4 588 365
- US-A- 5 219 586
- PATENT ABSTRACTS OF JAPAN vol. 017, no. 694 (M-1531), 17. Dezember 1993 (1993-12-17) & JP 05 237866 A (TOYO MACH & METAL CO LTD), 17. September 1993 (1993-09-17)
- PATENT ABSTRACTS OF JAPAN vol. 008, no. 201 (M-325), 14. September 1984 (1984-09-14) & JP 59 089130 A (SUMITOMO JUKIKAI KOGYO KK), 23. Mai 1984 (1984-05-23)
- PATENT ABSTRACTS OF JAPAN vol. 006, no. 074 (M-127), 11. Mai 1982 (1982-05-11) & JP 57 014023 A (YAMASHIRO SEIKI SEISAKUSHO:KK), 25. Januar 1982 (1982-01-25)
- JOHANNABER, MICHAELI: "Handbuch Spritzgiessen" 13. November 2001 (2001-11-13) , CARL HANSER VERLAG , MÜNCHEN WIEN XP002232673 * Seite 772, letzter Absatz - Seite 773, Absatz 6 * * Seite 1197, Absatz 6 - Seite 1198, Absatz 2 *
- "LEITRECHNER KOORDINIERT ALLE WECHSELVORGAENGE" , PLASTVERARBEITER, ZECHNER UND HUETHIG VERLAG GMBH. SPEYER/RHEIN, DE, VOL. 41, NR. 4, PAGE(S) 142,144,146 XP000148452 ISSN: 0032-1338 * Seite 146, linke Spalte *

## Beschreibung

Die Erfindung betrifft ein Kunststoffspritzgießsystem und ein Verfahren zur Herstellung von Kunststoff-Formteilen, insbesondere für die Herstellung von kleinen Stückzahlen unterschiedlicher Formteile und für die Prüfköperherstellung.

Die Herstellung von kundenspezifischen Formteilen aus Kunststoff in kleinen Stückzahlen mittels üblicher Kunststoffspritzgießmaschinen ist sehr aufwendig. Einerseits muss das für die Herstellung des Formteils erforderliche Polymer entsprechend einer vorgegebenen Rezeptur compoundiert werden. Zur Compoundierung sind unter anderem die Schritte Mischen, Kneten, Walzen, Granulieren und Trocknen erforderlich.

Aus der DE 444 31 53 A1 ist ein Verfahren zur Herstellung von Formkörpern bekannt, bei dem die Ausgangsstoffe der Rezeptur vor dem Spritzgießen separat bei einer Temperatur unterhalb des Schmelzpunktes der Polymerkomponente mit dem niedrigsten Schmelzpunkt pulverförmig, intensiv miteinander vermischt werden und diese Mischung anschließend in der Spritzgießmaschine aufgeschmolzen und verarbeitet wird. Dadurch entfällt eine gesonderte Compoundierstufe.

Desweiteren ist aus US 5 219 586 ein Spritzgießverfahren für Einkomponenten- und Zweikomponentenspritzgießen bekannt, welches ein einziges Kunststoffspritzgießsystem mit zwei Spritzgießeinheiten verwendet.

Ferner ist in "Leitrechner koordiniert alle Wechselvorgänge," Plastverarbeiter 41(1990), Nr. 4 eine automatisierte Spritzgieß-Fertigungszelle beschrieben. Diese besteht aus autarken Funktionseinheiten, welche über einen Zellenrechner koordiniert werden. Dabei hat jede Funktionseinheit eine eigene Steuerung.

Ferner erfordert die Herstellung eines kundenspezifischen Formteils in kleiner Stückzahl die Umrüstung und Einrichtung der Kunststoffspritzgießmaschine. Das bedeutet, dass das Spritzgießwerkzeug manuell gewechselt werden muss und das ferner die erforderlichen Drücke und Temperaturen der Kunststoffspritzgießmaschine entsprechend eingestellt werden. Ferner ist auch eine Reinigung der Kunststoffspritzgießmaschine erforderlich, um Kunststoffmaterial einer vorausgehenden Produktion zu entfernen.

Besonders aufwendig ist die Herstellung von Prüfkörpern für die Untersuchung von Versuchs-Rezepturen für Forschungs- und Entwicklungswecke. So nimmt beispielsweise die Compoundierung für jede Versuchs-Rezeptur ca. 120 Minuten in Anspruch. Die Herstellung der erforderlichen Prüfkörper benötigt nochmals ca. 20 Minuten. Wenn zum Beispiel für mehrere tausend Versuchs-Rezepturen Prüfkörper hergestellt werden müssen, bedeutet dies einen immensen Zeit- und Kostenaufwand, zumal mehrere Kunststoff-Spritzgießmaschinen parallel eingesetzt werden müssen.

Der Erfindung liegt daher die Aufgabe zu Grunde ein verbessertes Verfahren zur Herstellung von Kunststoff-Formteilen und ein verbessertes Kunststoffspritzgießsystem sowie ein entsprechendes Computerprogramm zur Steuerung des Kunststoffspritzgießsystems zu schaffen.

Die der Erfindung zu Grunde liegende Aufgabe wird mit den Merkmalen der unabhängigen Ansprüche jeweils gelöst.

Bevorzugte Ausführungsformen der Erfindung sind in den abhängigen Patentansprüche angegeben.

Die vorliegende Erfindung erlaubt es auch kleinste Stückzahlen von Kunststoff-Formteilen rationell und kosteneffizient herzustellen. Dies ist insbesondere vorteilhaft für die Herstellung von kundenspezifischen Formteilen und für die Prüfkörperherstellung mit dem Ziel einer beschleunigten Entwicklung neuer Spritzgießwerkstoffe und zu Forschungszwecken.

Nach einer bevorzugten Ausführungsform der Erfindung werden Formteile aus demselben Grundmaterial mit verschiedenen Additiven auf derselben Kunststoffspritzgießmaschine mit einem Spritzgießwerkzeug hergestellt.

Bei dem Grundmaterial handelt es sich um ein Polymer, wie zum Beispiel um Polyamid oder um Polycarbonat. Das Polymer kann ein oder mehrere Zusätze beinhalten. Beispielsweise kann dem Polyamid ein dreißigprozentiger Glasfaseranteil hinzugefügt sein.

Das Grundmaterial wird der Kunststoffspritzgießmaschine über zweit getrennt voneinander steuerbare Materialzuführungen zugeführt. Die Kunststoffspritzgießmaschine hat beispielsweise eine Spritzgießeinheit, die auf einer Seite des Spritzgießwerkzeugs angeordnet ist und eine weitere Spritzgießeinheit, die auf der gegenüberliegenden Seite des Spritzgießwerkzeugs angeordnet ist. Jeder der Spritzgießeinheiten ist eine der Materialzuführungen zugeordnet.

Nach einer weiteren bevorzugten Ausführungsform der Erfindung wird einem aus einer der Materialzuführungen entnommenen Grundmaterial ein bestimmtes Additiv zugesetzt. Die Auswahl des zuzusetzenden Additivs ist dabei steuerbar. Auf diese Art und Weise wird beispielsweise dem Grundmaterial aus der Materialzuführung für eine der Spritzgießeinheiten ein bestimmtes Additiv zugesetzt, während dem Grundmaterial aus der Materialzuführung der anderen Spritzgießeinheit ein anderes Additiv zugesetzt wird.

Während der Herstellung eines Formteils mit einer der Spritzgießeinheiten befindet sich die andere Spritzgießeinheit in einer Materialwechselposition. In der Materialwechselposition wird die Spritzgießeinheit mit dem Grundmaterial aus der entsprechenden Materialzuführung gespült. Daraufhin kann mit der gespülten Spritzgießeinheit ein weiteres Formteil bestehend aus dem Grundmaterial und einem anderen Additiv hergestellt werden.

Auf diese Art und Weise lässt sich die für die Herstellung von Prüfkörpern für eine Versuchs-Rezeptur erforderliche Zeit auf ca. sechs Minuten reduzieren, wobei nur eine einzige Kunststoffspritzgießmaschine erforderlich ist.

Insbesondere bei der Herstellung von Prüfkörpern tritt wegen der Verwendung von Versuchs-Rezepturen häufiger ein Vercracken des Polymers während des Spritzgießvorgangs auf. Dies erfordert eine Reinigung der Spritzgießeinheit.

Nach einer weiteren bevorzugten Ausführungsform der Erfindung sind Ersatz-Spritzgießeinheiten vorgesehen, um eine zu reinigende Spritzgießeinheit zu ersetzen. Auf diese Art und Weise kann der Herstellungsprozess auch bei einem Vercracken kontinuierlich fortgesetzt werden. Die Ersatz-Spritzgießeinheiten werden vorzugsweise in einer Warteposition vorgeheizt.

Nach einer weiteren bevorzugten Ausführungsform sind weitere Reserve-Spritzgießeinheiten vorgesehen. Wenn eine Ersatz-Spritzgießeinheit an die Stelle einer zu reinigenden Spritzgießeinheit tritt, wird eine Reserve-Spritzgießeinheit in die Warteposition bewegt, um dort vorgeheizt zu werden. Die betreffende Reserve-Spritzgießeinheit tritt also an die Stelle der zuvor entnommenen Ersatz-Spritzgießeinheit. Auf diese Art und Weise ist auch bei einem relativ häufigen Vercracken aufgrund der Verwendung von Versuchs-Rezepturen ein kontinuierlicher Herstellungsprozess ermöglicht.

Im Weiteren werden bevorzugte Ausführungsformen der Erfindung mit Bezugnahme auf die Zeichnungen näher erläutert. Es zeigen:
- Figur 1: eine Prinzipdarstellung eines erfindungsgemäßen Kunststoffspritzgießsystems,
- Figur 2: eine weitere Ausführungsform eines erfindungemäßen Kunststoffspritzgießsystems,
- Figur 3: eine vergrößerte Darstellung des Spritzgießwerkzeugs des Kunststoffspritzgießsystems der Figur 2,
- Figur 4: ein Flussdiagramm für die Ablaufsteuerung des Kunststoffspritzgießsystems der Figur 2.

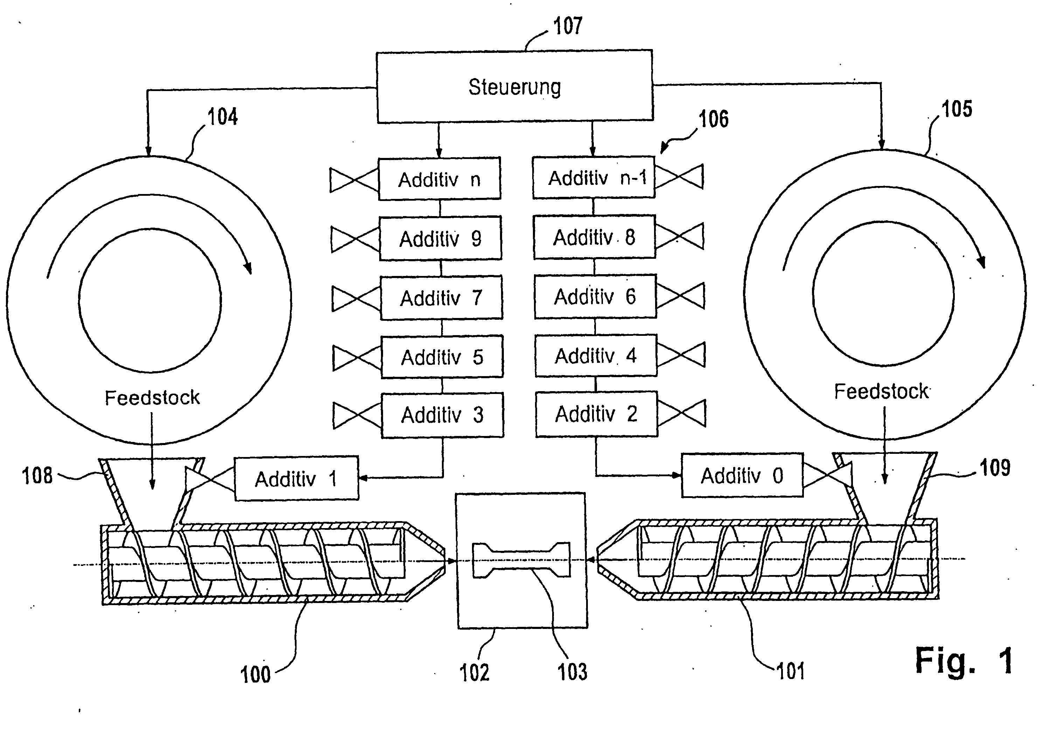

Die Figur 1 zeigt ein Kunststoffspritzgießsystem mit einer Spritzgießeinheit 100 und einer Spritzgießeinheit 101. Die Spritzgießeinheiten 100 und 101 sind auf gegenüberliegenden Seiten eines Spritzgießwerkzeugs 102 angeordnet. In dem Spritzgießwerkzeug 102 befindet sich zumindest eine Kavität zur Bildung einer oder mehrerer Formen 103.

Der Spritzgießeinheit 100 ist eine Materialzuführung 104 zugeordnet. Die Materialzuführung 104 dient zur Aufnahme von einem Grundmaterial für die Herstellung von Kunststoff-Formteilen. Bei dem Grundmaterial handelt es sich beispielsweise um Polycarbonat oder um Polyamid mit oder ohne Glasfaseranteil. Die mit dem Grundmaterial gefüllte Materialzuführung 104 wird auch als "Feedstock" bezeichnet. Eine entsprechende Materialzuführung 105 ist auch der Spritzgießeinheit 101 zugeordnet. Auch diese beinhaltet ein Grundmaterial.

Das Kunststoffspritzgießsystem beinhaltet ferner eine Additiv-Zuführung 106. Die Additiv-Zuführung 106 dient zur Aufnahme der Additive 0, 1, 2, ..., n-1,n.

Die Materialzuführungen 104 und 105 sowie die Additiv-Zuführung 106 sind mit einer Steuerung 107 verbunden. Ferner ist die Steuerung 107 mit - in der Figur 1 der Übersichtlichkeit halber nicht dargestellten Leitungsverbindungen - den Spritzgießeinheiten 100 und 101 sowie dem Spritzgießwerkzeug 102 verbunden.

Zur Herstellung eines Formteils aus dem Grundmaterial der Materialzuführung 104 mit einem oder mehreren der Additive, zum Beispiel Additiv 1, wird wie folgt vorgegangen: Die Steuerung 107 aktiviert die Materialzuführung 104 und selektiert das Additiv 1 in der Additiv-Zuführung 106. Das Grundmaterial aus der Materialzuführung 104 und das Additiv 1 werden dann in der Mischvorrichtung, die unterhalb der Materialzuführung 104 angeordnet ist, miteinander vermischt und danach der Spritzgießeinheit 100 zugeführt.

Die Steuerung 107 schließt ferner das Spritzgießwerkzeug 102 und bringt die Spritzgießeinheit 100 in eine Position für den Spritzgießvorgang. Daraufhin erfolgt die Herstellung von einem oder mehreren Formteilen aus dem Grundmaterial mit dem Additiv 1. Nachdem Formteile aus dem Grundmaterial mit dem Additiv 1 in der gewünschten Menge hergestellt worden sind, kann ohne Unterbrechung der Produktion auf ein anderes Grundmaterial mit einem anderen Additiv umgeschaltet werden.

Dazu aktiviert die Steuerung 107 die Materialzuführung 105 und selektiert das oder die gewünschten Additive der Additiv-Zuführung 106. In dem Beispiel der Figur 1 wurde das Additiv 0 von der Steuerung 107 selektiert. Das Grundmaterial aus der Materialzuführung 105 und das selektierte Additiv 0 werden dann in einer Mischvorrichtung 109, die unterhalb der Materialzuführung 105 angeordnet ist, miteinander vermischt und der Spritzgießeinheit 101 zugeführt.

Die Steuerung 107 bringt die Spritzgießeinheit 101 in eine Position für den Spritzgießvorgang und schließt das Werkzeug 102. Daraufhin kann die Herstellung von einem oder mehreren Formteilen aus dem Grundmaterial mit dem Additiv 0 erfolgen.

Während der Herstellung des oder der Formteile aus dem Grundmaterial der Materialzuführung 105 mit dem selektierten Additiv 0 befindet sich die Spritzgießeinheit 100 in einer Materialwechselposition. Die Steuerung 107 aktiviert die Materialzuführung 104 und schaltet den Zusatz von Additiven zu dem Grundmaterial der Materialzuführung 104 ab.

Aufgrund dessen wird der Spritzgießeinheit 100 Grundmaterial aus der Materialzuführung 104 ohne zugesetzte Additive zugeführt. Dieses plastifizierte Grundmaterial durchströmt die Spritzgießeinheit 100 in der Materialwechselposition, so dass die Spritzgießeinheit 100 von dem Additiv des vorhergehenden Spritzgießvorgangs gereinigt wird. Von besonderem Vorteil ist hierbei, dass der Spülvorgang der einen Spritzgießeinheit gleichzeitig mit dem Spritzgießvorgang für die Herstellung von Kunststoff-Formteilen der anderen Spritzgießeinheit erfolgen kann.

Der oben geschilderte Vorgang wird dann alternierend wiederholt, das heißt, nachdem Formteile in der gewünschten Menge aus dem Grundmaterial der Materialzuführung 105 mit dem Additiv 0 mittels der Spritzgießeinheit 101 hergestellt worden sind, wird die Spritzgießeinheit 101 ihrerseits durch entsprechende Ansteuerung seitens der Steuerung 100 auf eine Materialwechselposition gefahren, um einen Spülvorgang mit dem Grundmaterial der Materialzuführung 105 vorzunehmen, während die Spritzgießeinheit 100 wieder mit Grundmaterial aus der Materialzuführung 104 mit einem zugesetzten Additiv beschickt wird, um Formteile durch Spritzgießvorgänge herzustellen.

Auf diese Art und Weise ist ein laufender Wechsel der Rezeptur in einem kontinuierlichen Vorgang ohne Unterbrechung der Produktion ermöglicht. Von besonderem Vorteil ist dabei, dass hierfür nur eine einzige Kunststoffspritzgießmaschine erforderlich ist.

Vorteilhafte Anwendungen eines solchen Kunststoffspritzgießsystems sind für die Kleinserienproduktion von kundenspezifischen Formteilen gegeben. Solche Klein-bzw. Kleinstserien lassen sich mit dem Kunststoffspritzgießsystem der Figur 1 effizient und ökonomisch herstellen, da während des laufenden Produktionsprozesses auf unterschiedliche Materialzusammensetzungen umgeschaltet werden kann.

Ein besonders vorteilhafter Anwendungsfall des Kunststoffspritzgießsystems der Figur 1 ist die Herstellung von Prüfkörpern, wie sie für die Prüfung von Materialeigenschaften von Polymeren benötigt werden. Durch entsprechende Steuerung des Kunststoffspritzgießsystems lassen sich Prüfkörper für verschiedene Versuchs-Rezepturen in schneller Abfolge und mit relativ geringem Kosten- und Materialaufwand herstellen. Hervorzuheben ist dabei insbesondere, dass die oftmals teuren oder nur schwer erhältlichen Additive zielgerichtet ohne Schwund für die Herstellung der Prüfkörper verwendet werden.

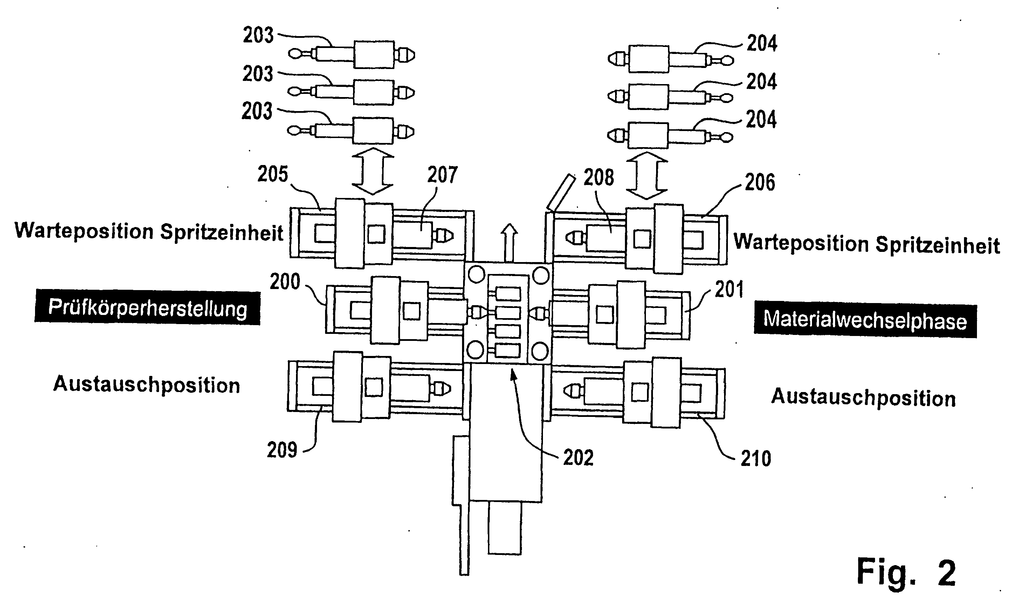

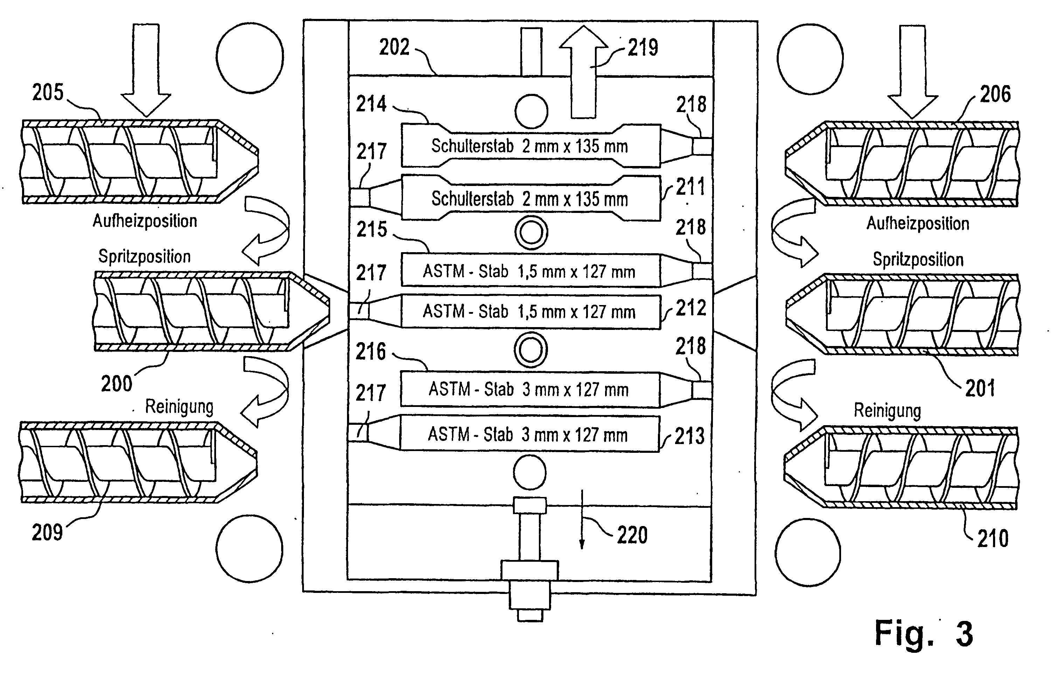

Die Figur 2 zeigt eine weitere bevorzugte Ausführungsform des erfindungsgemäßen Kunststoffspritzgießsystems. Das Kunststoffspritzgießsystem der Figur 2 beinhaltet eine Spritzgießeinheit 200 und eine Spritzgießeinheit 201, die an gegenüberliegenden Seiten eines Spritzgießwerkzeugs 202 angeordnet sind. Das Spritzgießwerkzeug 202 beinhaltet verschiedene Formen zur Herstellung von Formteilen, wie zum Beispiel Prüfkörpern. Eine Ausführungsform des Spritzgießwerkzeugs 202 wird unten mit Bezug auf die Figur 3 näher erläutert werden.

Wie in dem Kunststoffspritzgießsystem der Figur 1 sind auch in dem Kunststoffspritzgießsystem der Figur 2 der Spritzgießeinheit 200 und der Spritzgießeinheit 201 jeweils eine Materialzuführung zugeordnet. Ferner ist auch eine Additiv-Zuführung vorhanden, sowie eine Prozesssteuerung für das Kunststoffspritzgießsystem. Die Materialzuführungen, die Additiv-Zuführung sowie die Steuerung sind in der Darstellung der Figur 2 der Übersichtlichkeit halber nicht dargestellt.

Das Kunststoffspritzgießsystem der Figur 2 beinhaltet ferner mehrere Reserve-Spritzgießeinheiten 203 und 204 sowie entsprechende Wartepositionen 205 und 206. In den Wartepositionen 205 bzw. 206 befinden sich Ersatz-Spritzgießeinheiten 207 bzw. 208. Des Weiteren sind Austauschpositionen 209 und 210 vorgesehen. Diese dienen zur Reinigung von Spritzgießeinheiten.

Bei der Herstellung von Spritzgieß-Formteilen kann es zu einer Vercrackung des plastifizierten Polymers in der Spritzgießeinheit kommen. In dem in der Figur 2 dargestellten Beispielfall befindet sich die Spritzgießeinheit 200 in einem Spritzgießbetrieb für die Prüfkörperherstellung. Gerade bei Versuchs-Rezepturen aus denen Prüfkörper herzustellen sind, kann es häufiger zu solchen Vercrackungen kommen, da die Materialeigenschaften der Versuchs-Rezeptur noch nicht genau bekannt sind.

Für den Fall, dass eine solche Vercrackung in der Spritzgießeinheit 200 auftritt, wird wie folgt vorgegangen: Die Spritzgießeinheit 200 wird in die Austauschposition 209 gebracht. Unmittelbar danach wird die Ersatz-Spritzgießeinheit 207 aus ihrer Warteposition 205 in die Position für den Spritzgießvorgang, das heißt, die Prüfkörperherstellung, gebracht. Vorzugsweise wird die Ersatz-Spritzgießeinheit 207 in ihrer Warteposition 205 vorgewärmt, so dass der Spritzgießvorgang unmittelbar fortgesetzt werden kann.

Die Spritzgießeinheit 200 in der Austauschposition 209 kann dann gereinigt werden, ohne dass eine Unterbrechung des Herstellungsprozesses nötig ist. Ferner wird eine Reserve-Spritzgießeinheit 203 in die Warteposition 205 gebracht, um an die Stelle der Ersatz-Spritzgießeinheit 207 zu treten. Tritt ein erneutes Vercracken auf, so wird entsprechend verfahren und die verunreinigte Spritzgießeinheit durch die nachgeführte Ersatz-Spritzgießeinheit aus der Warteposition ersetzt.

Wenn nach dem Umschalten auf die Spritzgießeinheit 201 auf der gegenüberliegenden Seite ein Vercracken in dieser Spritzgießeinheit erfolgt, wird entsprechend vorgegangen: Die Spritzgießeinheit 201 wird in die Austauschposition 210 gebracht und die Ersatz-Spritzgießeinheit 208 wird aus ihrer Warteposition 206 an die Stelle der Spritzgießeinheit 201 gebracht, so dass die Produktion im Wesentlichen ohne Unterbrechung weiterlaufen kann. Die Spritzgießeinheit 201 wird in ihrer Austauschposition 210 gereinigt, während eine Reserve-Spritzgießeinheit 204 in die Warteposition 206 nachgeführt wird, um die aus der Warteposition entnommene Ersatz-Spritzgießeinheit 208 zu ersetzen.

Die Figur 3 zeigt eine Ausführungsform des Spritzgießwerkzeugs 202 der Figur 2. Das Spritzgießwerkzeug 202 beinhaltet die Formen 211, 212, 213, 214, 215 und 216. Die Formen 211, 212 und 213 sind der Spritzgießeinheit 200 zugeordnet, während die Formen 214, 215 und 216 der Spritzgießeinheit 201 zugeordnet sind. In dem Beispielsfall der Figur 3 befindet sich die Spritzgießeinheit 200 in der Spritzposition für die Prüfkörperherstellung (vgl. Figur 2), während sich die Spritzgießeinheit 201 in der Materialwechselposition befindet.

Die Formen 211, 212 und 213 haben Kanäle 217, die in Richtung auf die Spritzgießeinheit 200 verlaufen. Die Kanäle 217 dienen dazu das plastifzierte Polymer aus der Spritzgießeinheit 200 in die entsprechende Form 211, 212 oder 213 einzuspritzen.

Entsprechend weisen die Formen 214, 215 und 216 Kanäle 218 auf, welche zum Einspritzen des plastifizierten Polymers aus der Spritzgießeinheit 201 in die entsprechende Form dienen, wenn sich die Spritzgießeinheit 201 in der Position für den Spritzgießvorgang befindet.

Das Spritzgießwerkzeug 202 ist elektrisch in die Richtungen 219 und 220 translatorisch nach vorne und nach hinten verschiebbar. Es sind auch Anordnungen möglich, bei denen die Verschiebbarkeit rotatorisch erfolgt.

Wenn der Spritzgießvorgang mittels der Spritzgießeinheit 200 erfolgen soll, wird das Spritzgießwerkzeug 202 in eine solche Position gebracht, dass der Kanal 217 der für die Herstellung des Formteils zu verwendenden Form der Spritzgießeinheit 200 unmittelbar gegenüber liegt. In dem betrachteten Beispielsfall der Figur 3 handelt es sich hierbei um die Form 212. Soll in einem nachfolgenden Spritzgießvorgang aus demselben Material ein Formteil mit der Form 211 oder 213 hergestellt werden, so wird das Spritzgießwerkzeug in Richtung 220 bzw. in Richtung 219 verschoben. Entsprechend verhält es sich für die Formen 214, 215 und 216.

Die Formen 214 und 211 dienen zur Herstellung eines Schulterstabs der Abmessungen 2 mm x 135 mm; die Formen 215 und 212 dienen zur Herstellung eines ASTM-Stabs der Abmessungen 1,5 mm x 125 mm (ASTM = American Society For Testing & Materials); die Formen 216 und 213 dienen zur Herstellung von ASTM-Stäben der Abmessung 3 mm x 127 mm.

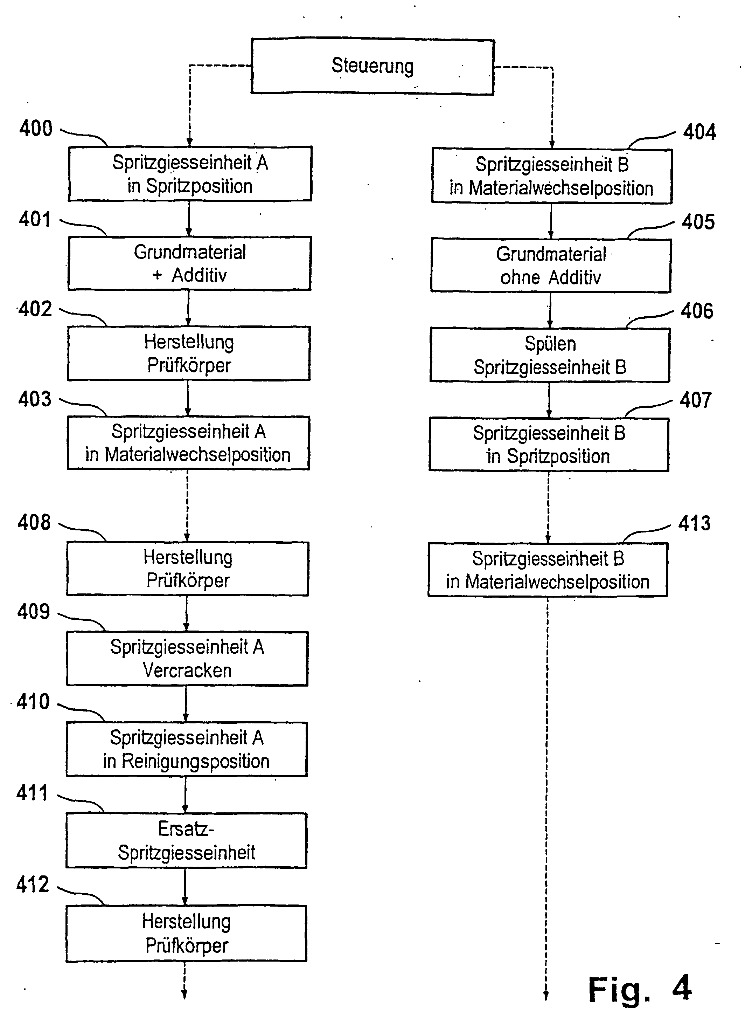

Die Figur 4 zeigt ein Flussdiagramm hinsichtlich der Steuerung der Kunststoffspritzgießsystem der Figuren 1 und 2. Die Steuerung des Kunststoffspritzgießsystems wird beispielsweise durch eine speicherprogrammierbare Prozesssteuereinheit (vgl. Steuerung 107 der Figur 1) vorgenommen.

In dem Schritt 400 wird die Spritzgießeinheit A (vgl. die Spritzgießeinheit 100 der Figur 1 und die Spritzgießeinheit 200 der Figur 2) in eine Position für den Spritzgießvorgang gebracht. In dem Schritt 401 wird der Spritzgießeinheit A mit Grundmaterial vermischtes Additiv zugeführt. Das Grundmaterial wird dazu aus der der Spritzgießeinheit A zugeordneten Materialzuführung entnommen und mit den selektierten Additiv oder den selektierten Additiven vermischt.

Die aus Grundmaterial und Additiv oder Additiven bestehende Polymermischung wird dann in der Spritzgießeinheit A plastifiziert, so dass in dem Schritt 402 die Herstellung von Prüfkörpern erfolgt. Wenn unterschiedliche Prüfkörper hergestellt werden sollen, wird die Position des Spritzgießwerkzeugs (vgl. Spritzgießwerkzeug 202 der Figur 3) entsprechend variiert.

Nachdem die erforderlichen Prüfkörper hergestellt worden sind, wird die Spritzgießeinheit A in dem Schritt 403 in ihre Materialwechselposition gebracht, um die Spritzgießeinheit A mit Grundmaterial zu spülen.

Parallel zu den Schritten 400 bis 403 wird mit Bezug auf die Spritzgießeinheit B (vgl. Spritzgießeinheit 101 der Figur 1 und Spritzgießeinheit 201 der Figur 2) wie folgt verfahren:

In dem Schritt 404 wird die Spritzgießeinheit B in ihre Materialwechselposition gebracht, nachdem zuvor Prüfkörper mittels der Spritzgießeinheit B hergestellt worden sind. In dem Schritt 405 wird die Spritzgießeinheit B mit Grundmaterial aus der der Spritzgießeinheit B zugeordneten Materialzuführung gespült, wobei dem Grundmaterial kein Additiv zugesetzt ist. Dieser Spülvorgang erfolgt in dem Schritt 406.

Nachdem die Spritzgießeinheit A in dem Schritt 403 in ihre Materialwechselposition gefahren worden ist, wird die Spritzgießeinheit B in dem Schritt 407 in deren Spritzposition gefahren, um mit der Herstellung von Prüfkörpern zu beginnen.

Dieses parallelen Schrittfolgen 400 bis 403 und 404 bis 407 wiederholen sich alternierend.

In einem Schritt 408 erfolgt die Herstellung eines Prüfkörpers mit der Spritzgießeinheit A. In dem Schritt 409 kommt es dabei zu einer Vercrackung. In dem Schritt 410 wird die Spritzgießeinheit A daraufhin in deren Reinigungsposition (vgl. Austauschposition 209 der Figur 2) gefahren. In dem Schritt 411 wird eine Ersatz-Spritzgießeinheit an die Stelle der Spritzgießeinheit A gebracht (vgl. Ersatz-Spritzgießeinheit 207 der Figur 2). Daraufhin wird in dem Schritt 412 die Herstellung von Prüfkörpern wieder aufgenommen. Parallel zu den Schritten 408 bis 412 befindet sich die Spritzgießeinheit B in deren Materialwechselposition (vgl. Schritt 404 bis 406).

Die oben geschilderte Ablaufsteuerung wird vorzugsweise durch ein entsprechendes Computerprogramm der Steuerung des Kunststoffspritzsystems realisiert.

### Bezugszeichenliste

- Spritzgießeinheit: 100
- Spritzgießeinheit: 101
- Spritzgießwerkzeug: 102
- Form: 103
- Materialzuführung: 104
- Materialzuführung: 105
- Additiv-Zuführung: 106
- Steuerung: 107
- Mischvorrichtung: 108
- Mischvorrichtung: 109
- Spritzgießeinheit: 200
- Spritzgießeinheit: 201
- Spritzgießwerkzeug: 202
- Reserve-Spritzgießeinheit: 203
- Reserve-Spritzgießeinheit: 204
- Warteposition: 205
- Warteposition: 206
- Ersatz-Spritzgießeinheit: 207
- Ersatz-Spritzgießeinheit: 208
- Austauschposition: 209
- Austauschposition: 210
- Form: 211
- Form: 212
- Form: 213
- Form: 214
- Form: 215
- Form: 216
- Kanal: 217
- Kanal: 218
- Richtung: 219
- Richtung: 220

## Patentansprüche

1. Verfahren zur Herstellung von Kunststoff-Formteilen mit folgenden Schritten:
- Herstellung eines ersten Formteils aus einem Grundmaterial mit einem ersten Additiv mittels einer ersten Spritzgießeinheit (100, 200),
- Spülen einer zweiten Spritzgießeinheit (101, 201) mit dem Grundmaterial in einem Zeitraum während der Herstellung des ersten Formteils,
- Herstellung eines zweiten Formteils aus dem Grundmaterial mit einem zweiten Additiv mittels der zweiten Spritzgießeinheit, (101, 201),
wobei zur Herstellung der ersten und zweiten Formteile ein Spritzgießwerkzeug (202) mit einer ersten Form (211, 212, 213) für das erste Formteil und einer zweiten Form (214, 215, 216) für das zweite Formteil verwendet wird.

2. Verfahren nach Anspruch 1, wobei das Grundmaterial für die erste Spritzgießeinheit einer ersten Materialzuführung (104) entnommen wird und das Grundmaterial für die zweite Spritzgießeinheit einer zweiten Materialzuführung (105) entnommen wird, wobei die ersten und zweiten Materialzuführungen gesondert steuerbar sind.

3. Verfahren nach Anspruch 1 oder 2, wobei die ersten und zweiten Spritzgießeinheiten an im Wesentlichen gegenüberliegenden Seiten des Spritzgießwerkzeugs angeordnet sind, und das Spritzgießwerkzeug zur Umstellung der Herstellung des ersten Formteils auf das zweite Formteil rotatorisch und/oder translatorisch bewegt wird.

4. Verfahren nach Anspruch 3, wobei es sich bei der Bewegung um eine translatorische Bewegung im Wesentlichen senkrecht zu den Spritzgießeinheiten handelt.

5. Verfahren nach einem der vorhergehenden Ansprüche 1 bis 4 mit folgenden weiteren Schritten:
- Vorheizen einer oder mehrerer erster und / oder zweiter Ersatz-Spritzgießeinheiten,
- Austausch der ersten oder zweiten Spritzgießeinheit, wenn bei einem Spritzgießvorgang ein Vercracken auftritt, gegen die erste bzw. die zweite Ersatz-Spritzgießeinheit.

6. Verfahren nach Anspruch 5, wobei die erste oder zweite Spritzgießeinheit in eine Austauschposition zur Reinigung bewegt wird.

7. Verfahren nach Anspruch 5 oder 6, wobei eine oder mehrere erste und/oder zweite Reserve-Spritzgießeinheiten zur Verfügung gestellt werden und eine der Reserve-Spritzgießeinheiten vorgeheizt wird, wenn eine Spritzgießeinheit durch eine Ersatz-Spritzgießeinheit ersetzt worden ist, so dass die Reserve-Spritzgießeinheit an die Stelle der betreffenden Ersatz-Spritzgießeinheit tritt.

8. Verfahren nach einem der vorhergehenden Ansprüche 1 bis 7, wobei es sich bei den ersten und zweiten Formteilen um Prüfkörper handelt.

9. Verfahren nach Anspruch 8, wobei das Spritzgießwerkzeug einen Satz erster Formen zur Herstellung von verschiedenen ersten Prüfkörpern und einen Satz zweiter Formen zur Herstellung von verschiedenen zweiten Prüfkörpern aufweist und wobei die Formen in dem Spritzgießwerkzeug im Wesentlichen senkrecht zu der Bewegungsrichtung des Spritzgießwerkzeugs angeordnet sind.

10. Kunststoffspritzgießsystem mit
- einer ersten Spritzgießeinheit (100; 200) zur Herstellung eines ersten Formteils aus einem Grundmaterial mit einem ersten Additiv,
- einer zweiten Spritzgießeinheit (101; 201) zur Herstellung eines zweiten Formteils aus dem Grundmaterial mit einem zweiten Additiv,
- Mitteln (105) zum Spülen der zweiten Spritzgießeinheit mit dem Grundmaterial während der Herstellung des ersten Formteils mittels der ersten Spritzgießeinheit,
- einem Spritzgießwerkzeug (202) mit einer ersten Form (211, 212, 213) zur Herstellung des ersten Formteils und einer zweiten Form (214, 215, 216) zur Herstellung des zweiten Formteils.

11. Kunststoffspritzgießsystem nach Anspruch 10 mit einer ersten Materialzuführung (104) für das Grundmaterial für die erste Spritzgießeinheit und mit einer zweiten Materialzuführung (105) für das Grundmaterial für die zweite Spritzgießeinheit, wobei die ersten und zweiten Materialzuführungen gesondert steuerbar sind.

12. Kunststoffspritzgießsystem nach Anspruch 11, wobei die erste und/oder die zweite Materialzuführung zur Spülung der zweiten Spritzgießeinheit mit dem Grundmaterial ausgebildet ist.

13. Kunststoffspritzgießsystem nach einem der vorhergehenden Ansprüche 10 bis 12, bei dem die ersten und zweiten Spritzgießeinheiten an gegenüberliegenden Seiten des Spritzgießwerkzeugs angeordnet sind und mit Mitteln zur rotatorischen und /oder translatorischen Bewegung des Spritzgießwerkzeugs zur Umstellung von der Herstellung des ersten Formteils auf das zweite Formteil.

14. Kunststoffspritzgießsystem nach Anspruch 13, wobei die Mittel zur Bewegung zur translatorischen Bewegung (219, 220) des Spritzgießwerkzeugs in einer Richtung im Wesentlichen senkrecht zu den ersten und zweiten Spritzgießeinheiten ausgebildet ist.

15. Kunststoffspritzgießsystem nach einem der vorhergehenden Ansprüche 10 bis 14 mit
- einer oder mehreren ersten und / oder zweiten Ersatz-Spritzgießeinheiten (205, 206),
- Mitteln zum Vorheizen der Ersatz-Spritzgießeinheit bzw. der Ersatz-Spritzgießeinheiten,
- Mitteln zum Austausch einer ersten oder zweiten Spritzgießeinheit durch eine erste bzw. zweite Ersatz-Spritzgießeinheit.

16. Kunststoffspritzgießsystem nach Anspruch 15 mit Mitteln zur Bewegung der ersten und/oder zweiten Spritzgießeinheit in eine Austauschposition (209, 210).

17. Kunststoffspritzgießsystem nach einem der vorhergehenden Ansprüche 10 bis 16 mit einer oder mehreren ersten und/oder zweiten Reserve-Spritzgießeinheiten (203, 204) und mit Mitteln zur Bewegung einer Reserve-Spritzgießeinheit in eine Position einer Ersatz-Spritzgießeinheit.

18. Kunststoffspritzgießsystem nach einem der vorhergehenden Ansprüche 10 bis 17, wobei in dem Spritzgießwerkzeug erste Formen zur Herstellung von verschiedenen ersten Probekörpern und zweite Formen zur Herstellung von verschiedenen zweiten Probekörpern ausgebildet sind und die ersten und zweiten Formen im Wesentlichen senkrecht zu der Bewegungsrichtung des Spritzgießwerkzeugs angeordnet sind.

19. Kunststoffspritzgießsystem nach einem der vorhergehenden Ansprüche 10 bis 18 mit Mitteln (106) zur Zuführung unterschiedlicher erster Additive zu dem Grundmaterial der ersten Materialzuführung und mit Mitteln (106) zur Zuführung verschiedener zweiter Additive zu dem Grundmaterial aus der zweiten Materialzuführung.

## Claims

1. Process for the production of plastic mouldings with the following steps:
- production of a first moulding from a basic material with a first additive using a first injection moulding unit (100, 200),
- flushing a second injection moulding unit (101, 201) with the basic material in a period during the production of the first moulding,
- production of a second moulding from the basic material with a second additive using the second injection moulding unit (101, 201),
wherein, to produce the first and second mouldings, an injection moulding tool (202) with a first mould (211, 212, 213) for the first moulding and a second mould (214, 215, 216) for the second moulding is used.

2. Process according to claim 1, wherein the basic material for the first injection moulding unit is taken from a first material feed (104) and the basic material for the second injection moulding unit is taken from a second material feed (105), the first and second material feeds being capable of being controlled separately.

3. Process according to claim 1 or 2, wherein the first and second injection moulding units are arranged on substantially opposite sides of the injection moulding tool, and the injection moulding tool is moved in a rotational or translational manner to switch the production from the first moulding to the second moulding.

4. Process according to claim 3, wherein the movement is a translational movement substantially perpendicular to the injection moulding units.

5. Process according to one of the above claims 1 to 4 with the following additional steps:
- preheating of one or more first and/or second replacement injection moulding units,
- replacement of the first or second injection moulding unit against the first or the second replacement injection moulding unit, if during injection moulding operation a degradation occurs.

6. Process according to claim 5, wherein the first or second injection moulding unit is moved into an exchange position for cleaning.

7. Process according to claim 5 or 6, wherein one or more first and/or second reserve injection moulding units are provided and one of the reserve injection moulding units is preheated when an injection moulding unit has been replaced by a replacement injection moulding unit, so that the reserve injection moulding unit takes the place of the replacement injection moulding unit in question.

8. Process according to one of the above claims 1 to 7, wherein the first and second mouldings are test pieces.

9. Process according to claim 8, wherein the injection moulding tool has a set of first moulds for the production of various first test pieces and a set of second moulds for the production of various second test pieces, and wherein the moulds are arranged in the injection moulding tool substantially perpendicular to the direction of movement of the injection moulding tool.

10. Plastic injection moulding system with
- a first injection moulding unit (100; 200) for the production of a first moulding from a basic material with a first additive,
- a second injection moulding unit (101; 201) for the production of a second moulding from a basic material with a second additive,
- means (105) of flushing the second injection moulding unit with the basic material during the production of the first moulding by the first injection moulding unit,
- an injection moulding tool (202) with a first mould (211, 212, 213) for the production of the first moulding and a second mould (214, 215, 216) for the production of the second moulding.

11. Plastic injection moulding system according to claim 10 with a first material feed (104) for the basic material for the first injection moulding unit and with a second material feed (105) for the basic material for the second injection moulding unit, wherein the first and second material feeds can be controlled separately.

12. Plastic injection moulding system according to claim 11, wherein the first and/or second material feed is designed to flush the second injection moulding unit with the basic material.

13. Plastic injection moulding system according to one of the above claims 10 to 12, in which the first and second injection moulding units are arranged on opposite sides of the injection moulding tool, and with means for the rotational and/or translational movement of the injection moulding tool to switch the production from the first moulding to the second moulding.

14. Plastic injection moulding system according to claim 13, wherein the means of movement is designed for the translational movement (219, 220) of the injection moulding tool in a direction substantially perpendicular to the first and second injection moulding units.

15. Plastic injection moulding system according to one of the above claims 10 to 14 with
- one or more first and/or second replacement injection moulding units (205, 206),
- means of preheating the replacement injection moulding unit or units,
- means of exchanging a first or second injection moulding unit with a first or second replacement injection moulding unit.

16. Plastic injection moulding system according to claim 15 with means of moving the first and/or second injection moulding unit into an exchange position (209, 210).

17. Plastic injection moulding system according to one of the above claims 10 to 16 with one or more first and/or second reserve injection moulding units (203, 204) and with means of moving a reserve injection moulding unit into a position of a replacement injection moulding unit.

18. Plastic injection moulding system according to one of the above claims 10 to 17, wherein first moulds for the production of various first test pieces and second moulds for the production of various second test pieces are formed in the injection moulding tool and the first and second moulds are arranged substantially perpendicular to the direction of movement of the injection moulding tool.

19. Plastic injection moulding system according to one of the above claims 10 to 18 with means (106) of feeding different first additives into the basic material of the first material feed and with means (106) of feeding various second additives into the basic material from the second material feed.

## Revendications

1. Procédé de fabrication de pièces moulées en matière plastique avec les étapes suivantes :
- fabrication d'une première pièce moulée en une matière de base avec un premier additif, à l'aide d'une première unité de moulage par injection (100, 200),
- rinçage d'une deuxième unité de moulage par injection (101, 201) avec la matière de base dans une période située en cours de fabrication de la première pièce moulée,
- fabrication d'une deuxième pièce moulée en matière de base avec un deuxième additif, à l'aide de la deuxième unité de moulage par injection (101, 201),
pour la fabrication des premières et des deuxièmes pièces moulées, un moule d'injection (202) étant utilisé avec un premier moule (211, 212, 213) pour la première pièce moulée et avec un deuxième moule (214, 215, 216) pour la deuxième pièce moulée.

2. Procédé selon la revendication 1, la matière de base pour la première unité de moulage par injection étant prélevée dans une première alimentation de matière (104) et la matière de base pour la deuxième unité de moulage par injection étant prélevée dans une deuxième alimentation de matière (105), les premières et deuxièmes alimentations de matière étant pilotables séparément.

3. Procédé selon la revendication 1 ou 2, les premières et deuxièmes unités de moulage par injection étant disposées sur des côtés sensiblement opposés du moule d'injection et le moule d'injection étant déplacé par rotation et/ou par translation pour le passage de la fabrication de la première pièce moulée à celle de la deuxième pièce moulée.

4. Procédé selon la revendication 3, le déplacement étant un déplacement en translation sensiblement à la perpendiculaire des unités de moulage par injection.

5. Procédé selon l'une quelconque des revendications précédentes 1 à 4, avec les étapes supplémentaires suivantes :
- préchauffage d'une ou de plusieurs première(s) et/ou deuxième(s) unité(s) de moulage par injection de remplacement,
- s'il se produit un craquellement au cours du processus de moulage par injection, remplacement de la première ou deuxième unité de moulage par injection par la première ou par la deuxième unité de moulage par injection de remplacement.

6. Procédé selon la revendication 5, la première ou la deuxième unité de moulage par injection étant déplacée dans une position d'échange pour le nettoyage.

7. Procédé selon la revendication 5 ou 6, une ou plusieurs premiére(s) et/ou deuxième(s) unité (s) de moulage par injection de réserve étant mise(s) à disposition et l'une des unités de moulage par injection de réserve étant préchauffée lorsqu'une unité de moulage par injection a été remplacée par une unité de moulage par injection de remplacement, pour que l'unité de moulage par injection de réserve prenne la place de l'unité de moulage par injection de remplacement concernée.

8. Procédé selon l'une quelconque des revendications précédentes 1 à 7, les premières et les deuxièmes pièces moulées étant des éprouvettes.

9. Procédé selon la revendication 8, le moule d'injection comportant un jeu de premiers moules pour la fabrication de différentes premières éprouvettes et un jeu de deuxièmes moules pour la fabrication de différentes deuxièmes éprouvettes et les moules étant sensiblement disposés à la perpendiculaire de la direction de déplacement du moule d'injection, au sein du moule d'injection.

10. Système de moulage par injection de matière plastique avec
- une première unité de moulage par injection (100 ; 200) pour la fabrication d'une première pièce moulée en une matière de base avec un premier additif,
- une deuxième unité de moulage par injection (101 ; 201) pour la fabrication d'une deuxième pièce moulée en une matière de base avec un deuxième additif,
- des moyens (105) pour le rinçage de la deuxième unité de moulage par injection avec la matière de base pendant la fabrication de la première pièce moulée à l'aide de la première unité de moulage par injection,
- un moule d'injection (202) avec un premier moule (211, 212, 213) pour la fabrication de la première pièce moulée et avec un deuxième moule (214, 215, 216) pour la fabrication de la deuxième pièce moulée.

11. Système de moulage par injection de matière plastique selon la revendication 10, avec une première alimentation de matière (104) pour la matière de base pour la première unité de moulage par injection et avec une deuxième alimentation de matière (105) pour la matière de base pour la deuxième unité de moulage par injection, les premières et les deuxième alimentations de matière étant pilotables séparément.

12. Système de moulage par injection de matière plastique selon la revendication 11, la première et/ou la deuxième alimentation de matière étant conçue(s) pour le rinçage de la deuxième unité de moulage par injection avec la matière de base.

13. Système de moulage par injection de matière plastique selon l'une quelconque des revendications précédentes 10 à 12, dans lequel les premières et les deuxièmes unités de moulage par injection sont disposées sur des côtés opposés du moule d'injection et avec des moyens pour le déplacement en rotation et/ou en translation du moule d'injection, pour passer de la fabrication de la première pièce moulée à celle de la deuxième pièce moulée.

14. Système de moulage par injection selon la revendication 13, les moyens de déplacement étant conçus pour le déplacement en translation (219, 220) du moule d'injection dans une direction sensiblement perpendiculaire aux premières et au deuxièmes unités de moulage par injection.

15. Système de moulage par injection selon l'une quelconque des revendications précédentes 10 à 14, avec
- une ou plusieurs première(s) et/ou deuxième(s) unité(s) de moulage par injection de remplacement (205, 206),
- des moyens de préchauffage de l'unité de moulage par injection de remplacement ou des unités de moulage par injection de remplacement,
- des moyens d'échange d'une première ou d'une deuxième unité de moulage par injection contre une première ou une deuxième unité de moulage par injection de remplacement.

16. Système de moulage par injection de matière plastique selon la revendication 15, avec des moyens de déplacement des premières et/ou des deuxièmes unités de moulage par injection dans une position d'échange (209, 210).

17. Système de moulage par injection de matière plastique selon l'une quelconque des revendications précédentes 10 à 16, avec une ou plusieurs première(s) et/ou deuxième(s) unité(s) de moulage par injection de réserve (203, 204) et avec des moyens de déplacement des unités de moulage par injection de réserve dans une position d'une unité de moulage par injection de remplacement.

18. Système de moulage par injection de matière plastique selon l'une quelconque des revendications précédentes 10 à 17, des premiers moules pour la fabrication de différentes premières éprouvettes et des deuxièmes moules pour la fabrication de différentes deuxièmes éprouvettes étant conçus dans le moule d'injection et les premiers et les deuxièmes moules étant disposés sensiblement à la perpendiculaire de la direction de déplacement du moule d'injection.

19. Système de moulage par injection de matière plastique selon l'une quelconque des revendications précédentes 10 à 18, avec des moyens (106) pour l'alimentation de différents premiers additifs vers la matière de base de la première alimentation de matière de base et avec des moyens (106) pour l'alimentation de différents deuxièmes additifs vers la matière de base de la deuxième alimentation de matière de base.
